# EUROPEAN PATENT APPLICATION

(11) **EP 4 618 586 A1**
(43) Date of publication of application: **17.09.2025**
(21) Application number: 23946206.2
(22) Date of filing: 26.07.2023
(51) Int. Cl.: H04R 1/08, H04R 19/04

(54) **MICROPHONE**

(71) Applicant: Shenzhen Shokz Co., Ltd., Shenzhen, Guangdong 518108 (CN)
(72) Inventor: HUANG, Yujia, Shenzhen, Guangdong 518108 (CN); DENG, Wenjun, Shenzhen, Guangdong 518108 (CN); YUAN, Yongshuai, Shenzhen, Guangdong 518108 (CN); ZHOU, Wenbing, Shenzhen, Guangdong 518108 (CN); LIAO, Fengyun, Shenzhen, Guangdong 518108 (CN)
(74) Representative: Wang, Bo
(86) International application number: PCT/CN2023/109260
(87) International publication number: WO 2025/020115

(57) **Abstract**

A microphone (100) comprises a support member (130), a plurality of beam structures (120), and a housing (110). One end of each beam structure (120) of the plurality of beam structures (120) is arranged on the support member (130). The plurality of beam structures (120) vibrate along a first direction. At least a portion of the plurality of beam structures (120) are provided with a piezoelectric transducer. The piezoelectric transducer is configured to generate an electrical signal in response to the vibration of the plurality of beam structures (120). The housing (110) is configured to accommodate the support member (130) and the beam structures (120). The housing (110) forms a first cavity (111) and a second cavity (112) along the first direction and located on both sides of the plurality of beam structures (120). The housing (110) is provided with a first sound guiding hole (1111) and a second sound guiding hole (1112), the first sound guiding hole (1111) is acoustically coupled with the first cavity (111), the second sound guiding hole (1112) is acoustically coupled with the second cavity (112), the plurality of beam structures (120) are distributed spaced apart in a second direction perpendicular to the first direction, and gaps between the plurality of beam structures (120) allow air to flow between the first cavity (111) and the second cavity (112).

## Description

### TECHNICAL FIELD

This disclosure relates to the field of acoustics, specifically to microphones.

### BACKGROUND

With the continuous advancement of consumer electronics, the demand for directional microphones is increasing, with significant potential applications in scenarios such as scene recognition, sound source localization, noise-reducing calls, and hearing assistance. Therefore, it is desirable to provide microphones with directional capabilities.

### SUMMARY

One embodiment of this disclosure provides a microphone, including a support member, a plurality of beam structures, and a housing. One end of each beam structure of the plurality of beam structures is arranged on the support member. The plurality of beam structures vibrate along a first direction. At least a portion of the plurality of beam structures are provided with a piezoelectric transducer. The piezoelectric transducer is configured to generate an electrical signal in response to the vibration of the plurality of beam structures. The housing is configured to accommodate the support member and the plurality of beam structures. The housing forms a first cavity and a second cavity along the first direction on both sides of the plurality of beam structures. The housing is provided with a first sound guiding hole and a second sound guiding hole. The first sound guiding hole is acoustically coupled with the first cavity The second sound guiding hole is acoustically coupled with the second cavity. The plurality of beam structures are spaced apart in a second direction perpendicular to the first direction. Gaps among the plurality of beam structures allow air to communication between the first cavity and the second cavity.

In some embodiments, the ratio of a length of each beam structure of the plurality of beam structures to a width of the each beam structure is within a range of 10 - 2000.

In some embodiments, the ratio of a length of each beam structure of the plurality of beam structures to a thickness of the each beam structure is within a range of 80 - 2000.

In some embodiments, the length of the each beam structure of the plurality of beam structures is within a range of 1 µm - 2000 µm.

In some embodiments, the width of the each beam structure of the plurality of beam structures is within a range of 1 µm - 100 µm.

In some embodiments, the thickness of the each beam structure of the plurality of beam structures is within a range of 0.1 µm - 10 µm.

In some embodiments, a gap between adjacent beam structures of the plurality of beam structures in the second direction is within a range of 10 µm - 100 µm.

In some embodiments, each beam structure of the plurality of beam structures has a same length.

In some embodiments, at least two of the plurality of beam structures have different lengths.

In some embodiments, the plurality of beam structures are located on different sidewalls of the support member.

In some embodiments, at least a portion of the plurality of beam structures have a resonant frequency of less than 20 kHz.

In some embodiments, a ratio of a distance between the piezoelectric transducer and a connection portion of the plurality of beam structures with the support member to a length of a beam structure where the piezoelectric transducer is located is less than 1/2.

In some embodiments, a projection area ratio of the piezoelectric transducer on a beam structure provided with the piezoelectric transducer is within a range of 1/10 - 1.

In some embodiments, the plurality of beam structures include a stress regulation layer.

In some embodiments, a material of the piezoelectric transducer includes at least one of zinc oxide, aluminum nitride, lead zirconate titanate (PZT), or polyvinylidene fluoride (PVDF) flexible piezoelectric material.

In some embodiments, an other end of at least a portion of the plurality of beam structures is connected to at least one vibration sensing portion, and the at least one vibration sensing portion is provided with a hole array.

In some embodiments, an aperture of each hole in the hole array is within a range of 5 µm - 50 µm.

In some embodiments, a gap between two adjacent holes in the hole array is within a range of 0.1 µm - 50 µm.

In some embodiments, the plurality of beam structures includes a plurality of groups of beam structures, a count of the at least one vibration sensing portion is more than two, and each vibration sensing portion of the more than two vibration sensing portions is connected to one group of beam structures of the plurality of groups of beam structures.

In some embodiments, projection areas of different vibration sensing portions of the more than two vibration sensing portions along the first direction are different.

In some embodiments, a ratio of a length of each beam structure of the plurality of beam structures to a length of a vibration sensing portion connected thereto is within a range of 0.5 - 10.

In some embodiments, a projection area of each vibration sensing portion of the at least one vibration sensing portion along the first direction is greater than a projection area of a beam structure connected thereto along the first direction.

In some embodiments, at least a portion of the plurality of beam structures are located on different sidewalls of the support member, and the at least a portion of the plurality of beam structures located on the different sidewalls of the support member are connected to a same vibration sensing portion of the at least one vibration sensing portion.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which the same reference numerals represent the same structures, where:
FIG. 1 is a schematic diagram illustrating a structure of a microphone according to some embodiments of the present disclosure.
FIG. 2 is a response diagram of a microphone under different angles between a direction of a sound wave and a vibration direction of a beam structure according to some embodiments of the present disclosure;
FIG. 3 is a schematic diagram of an exemplary beam structure according to some embodiments of the present disclosure;
FIG. 4 is an exemplary distribution diagram of a plurality of beam structures according to some embodiments of the present disclosure;
FIG. 5 is an exemplary distribution diagram of a plurality of beam structures according to some embodiments of the present disclosure;
FIG. 6 is an exemplary distribution diagram of a plurality of beam structures according to some embodiments of the present disclosure;
FIG. 7 is an exemplary distribution diagram of a plurality of beam structures according to some embodiments of the present disclosure;
FIG. 8 is an exemplary distribution diagram of a plurality of beam structures according to some embodiments of the present disclosure;
FIG. 9 is an exemplary distribution diagram of a plurality of beam structures according to some embodiments of the present disclosure;
FIG. 10 is an exemplary distribution diagram of a plurality of beam structures according to some embodiments of the present disclosure;
FIG. 11 is an exemplary distribution diagram of a plurality of beam structures according to some embodiments of the present disclosure;
FIG. 12 is an exemplary distribution diagram of a plurality of beam structures according to some embodiments of the present disclosure;
FIG. 13 is an exemplary distribution diagram of a plurality of beam structures according to some embodiments of the present disclosure;
FIG. 14 is an exemplary distribution diagram of a plurality of beam structures according to some embodiments of the present disclosure;
FIG. 15 is an exemplary distribution diagram of a plurality of beam structures according to some embodiments of the present disclosure;
FIG. 16 is an exemplary distribution diagram of a plurality of beam structures according to some embodiments of the present disclosure;
FIG. 17 is an exemplary distribution diagram of a plurality of beam structures according to some embodiments of the present disclosure;
FIG. 18A is an exemplary distribution diagram of a piezoelectric transducer according to some embodiments of the present disclosure;
FIG. 18B is an exemplary distribution diagram of a piezoelectric transducer according to some embodiments of the present disclosure;
FIG. 19 is a schematic diagram illustrating a structure of a beam structure according to some embodiments of the present disclosure;
FIG. 20 is a schematic diagram of a vibration sensing portion according to some embodiments of the present disclosure;
FIG. 21 is a schematic diagram illustrating a connection between a vibration sensing portion and a beam structure according to some embodiments of the present disclosure; and
FIG. 22 is a schematic diagram illustrating a connection between a vibration sensing portion and a beam structure according to some embodiments of the present disclosure.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation.

It should be understood that the terms "system," "device," "unit" and/or "module" used herein are one method to distinguish different components, elements, parts, sections, or assemblies of different levels. However, the terms may be displaced by another expression if they achieve the same purpose.

As shown in this disclosure and the claims, the words "a," "one," and/or "the" do not refer specifically to the singular forms but may also include the plural forms as well, unless the context clearly indicates otherwise. Generally, the terms "including," and "comprising" suggest only the inclusion of clearly identified steps and elements, and do not constitute an exclusive list, and the method or apparatus may also include other steps or elements.

Flowcharts are used in this disclosure to illustrate operations performed by a system according to embodiments of this disclosure. It should be appreciated that the preceding or following operations are not necessarily performed in an exact sequence. Instead, steps can be processed in reverse order or simultaneously. Also, it is possible to add other operations to these processes or remove a step or steps from them.

The embodiments of the present disclosure provide a piezoelectric microphone. In some embodiments, the piezoelectric microphone includes a housing and a plurality of beam structures. The housing has an accommodating cavity, and the plurality of beam structures are located within the accommodating cavity. The housing forms a first cavity and a second cavity along a first direction on both sides of the plurality of beam structures. The housing is provided with a first sound guiding hole and a second sound guiding hole. The first sound guiding hole is acoustically coupled with the first cavity, and the second sound guiding hole is acoustically coupled with the second cavity. The plurality of beam structures are spaced apart in a second direction perpendicular to the first direction, and gaps among the plurality of beam structures allow air communication between the first cavity and the second cavity. The plurality of beam structures vibrates along the first direction in response to an external sound signal (e.g., sound waves). At least a portion of the plurality of beam structures are provided with a piezoelectric transducer. The piezoelectric transducer generates an electrical signal in response to the vibration of the plurality of beam structures. It should be understood that the "first direction" in the present disclosure refers to a vibration direction of the plurality of beam structures, the "second direction" refers to an arrangement direction of the plurality of beam structures, and the "third direction" refers to an extension direction between two fixed ends (or a fixed end and a free end) of a beam structure (for example, when the beam structure is connected to a vibration sensing portion, the third direction refers to the extension direction of the beam structure toward the vibration sensing portion) of the plurality of beam structures. The first direction, the second direction, and the third direction are mutually perpendicular. The first direction can also be referred to as a thickness direction of the plurality of beam structures, the second direction can also be referred to as a width direction of the plurality of beam structures, and the third direction can also be referred to as a length direction of the plurality of beam structures.

Specifically, sound waves propagate through the air via the gaps among the plurality of beam structures. The flow of air molecules generates viscous forces, causing the plurality of beam structures to vibrate up and down under the influence of the viscous forces. In some embodiments, the piezoelectric transducer includes a piezoelectric element. Due to the piezoelectric effect, when the piezoelectric element receives mechanical vibrations from the plurality of beam structures and deforms accordingly, the piezoelectric element generates corresponding electrical signals, thereby converting sound waves into electrical signals. Sound waves incident from different directions cause air molecules to flow in different directions, resulting in viscous forces of varying directions. An amplitude (e.g., a displacement) of the plurality of beam structures varies under the influence of viscous forces from different directions, correspondingly, the piezoelectric transducer (the piezoelectric element) receives the mechanical vibrations of the plurality of beam structures, resulting in varying magnitudes of deformation corresponding to the vibrations, and leading to variations in the strength of the generated electrical signals. This enables directional recognition for a piezoelectric microphone. For example, when the sound source is located relative to the plurality of beam structures in the first direction, the amplitude of the plurality of beam structures is large, resulting in a strong electrical signal. When the sound source is located relative to the beam structures in the third direction, the amplitude is small, almost negligible, resulting in a weak electrical signal. The directional recognition of the piezoelectric microphone is achieved based on the strength of the generated electrical signals.

In some embodiments, the directional recognition of sound waves by the piezoelectric microphone may be used for sound source localization. By leveraging the directivity of the piezoelectric microphone and determining a distance of the sound waves, the sound source localization can be achieved. In some embodiments, the directional recognition of sound waves by the piezoelectric microphone may be applied to Acoustic Scene Classification (ASC), aiding in the identification of acoustic scenes. In some embodiments, the directional recognition of sound waves by the piezoelectric microphone may also be used for noise-reducing calls, hearing assistance, and adaptive sound settings for devices (e.g., smartphones, headphones, etc.).

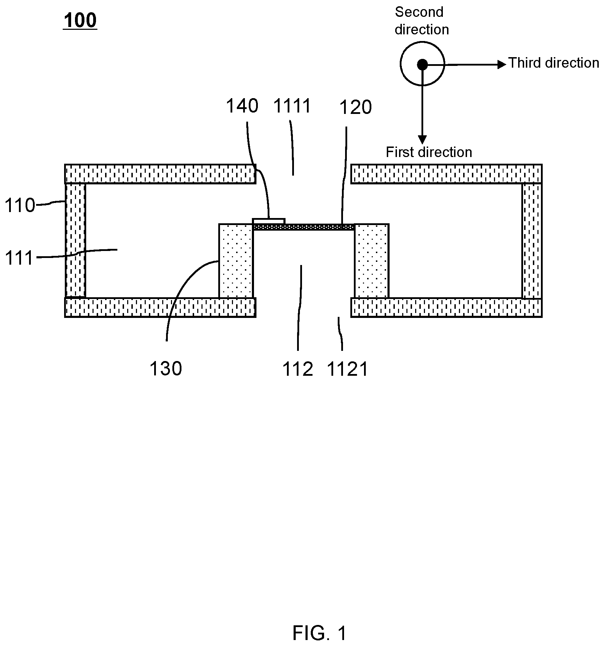

FIG. 1 is a schematic diagram illustrating a structure of a microphone according to some embodiments of the present disclosure.

As shown in FIG. 1, a microphone 100 includes a housing 110, a beam structure 120, and a support member 130. The housing 110 has an accommodating cavity in which the beam structure 120 and the support member 130 are arranged. The support member 130 is configured to support the beam structure 120, with one end of the beam structure 120 placed on the support member 130. The beam structure 120 is provided with a piezoelectric transducer 140 that generates electrical signals in response to vibrations of the beam structure 120. The beam structure 120 and the support member 130 divide the accommodating cavity into a first cavity 111 and a second cavity 112. The first cavity 111 and the second cavity 11 are located on opposite sides of the beam structure 120 along a first direction (see FIG. 1). A portion of the housing 110 on a side of the beam structure 120 away from the support member 130 forms the first cavity 111, while a portion of the housing 110 on a side of the beam structure 120 near the support member 130 forms the second cavity 112. The housing 110 is provided with a first sound guiding hole 1111 and a second sound guiding hole 1121. The first sound guiding hole 1111 connects with the first cavity 111, allowing acoustic communication between the first cavity 111 and an external environment of the microphone 100. Similarly, the second sound guiding hole 1121 connects with the second cavity 112, enabling acoustic communication between the second cavity 112 and the external environment of the microphone 100. In some embodiments, external sound waves may enter the second cavity 112 through the second sound guiding hole 1121, pass through the support member 130 and the beam structure 120, traverse the first cavity 111, and exit via the first sound guiding hole 1111. During this process, the sound waves may induce vibrations in the beam structure 120 along the first direction, and the piezoelectric transducer 140 converts these mechanical vibrations into electrical signals. In some embodiments, the external sound waves may enter the first cavity 111 through the first sound guiding hole 1111 and exit via the second sound guiding hole 1121.

The housing 110 is a three-dimensional structure with the accommodating cavity (e.g., a hollow interior). In some embodiments, the housing 110 may have a regular shape such as a cuboid, a sphere, a polyhedron, a prism, or any irregularly shaped structure. A material of the housing 110 may include a metal (e.g., stainless steel, copper), a plastic (e.g., polyethylene (PE), polypropylene (PP), polyvinyl chloride (PVC), polystyrene (PS), and acrylonitrile-butadiene-styrene copolymer (ABS)), a composite material (e.g., metal-based or non-metal-based composites), epoxy resin, phenolic resin, ceramics, polyimide, fiberglass (e.g., FR4-glass fiber), or any combination thereof.

The support member 130 is a structure with an open end. The beam structure 120 is positioned at the open end. An end of the support member 130 opposite to the beam structure 120 is connected to the housing 110, thereby dividing the accommodating cavity into the first cavity 111 and the second cavity 112 on opposite sides of the beam structure 120 and the support member 130. In some embodiments, the support member 130 may be a tubular structure open at both ends, with one end connected to the housing 110 and the other end attached to the beam structure 120. In some embodiments, the support member 130 may be made of semiconductor materials, including but not limited to silicon dioxide, silicon nitride, gallium nitride, zinc oxide, silicon carbide, etc.

In some embodiments, the beam structure 120 may be physically connected to the support member 130. The term "connected to" described in the present disclosure can be understood as a connection between different parts of the same structure, or a fixed connection of independent components or structures through manners such as welding, riveting, snap-fitting, bolting, adhesive bonding after separately preparing different parts or structures. Alternatively, during a preparation process, a first component or structure may be deposited onto a second component or structure through physical deposition (e.g., physical vapor deposition) or chemical deposition (e.g., chemical vapor deposition).

In some embodiments, to prevent the connection between the support member 130 and the beam structure 120 from affecting the vibration of the beam structure 120, the beam structure 120 may be elastically connected to the support member 130. In some embodiments, one end of the beam structure 120 is elastically connected to an inner wall of the open end of the support member 130. In some embodiments, one end of the beam structure 120 is elastically connected to an end face of the support member 130 near the beam structure 120.

The beam structure 120 is configured to convert audio signals (sound waves) into mechanical vibrations. In some embodiments, the beam structure 120 extends along a third direction perpendicular to the first direction (see FIG. 1) and generates vibrations along the first direction. In some embodiments, the beam structure 120 may be a sheet-like or a rod-like structure. In some embodiments, the material of the beam structure 120 may be a material capable of transmitting vibrations. For example, the material of the beam structure 120 may include silicone, foam, plastic, rubber, metal, or any combination thereof. In some embodiments, the beam structure 120 may be a component with good elasticity (e.g., prone to elastic deformation). For example, the beam structure 120 may include a spring (e.g., an air spring, a mechanical spring, an electromagnetic spring, etc.), a vibration transmission sheet, an elastic sheet, substrates, or any combination thereof.

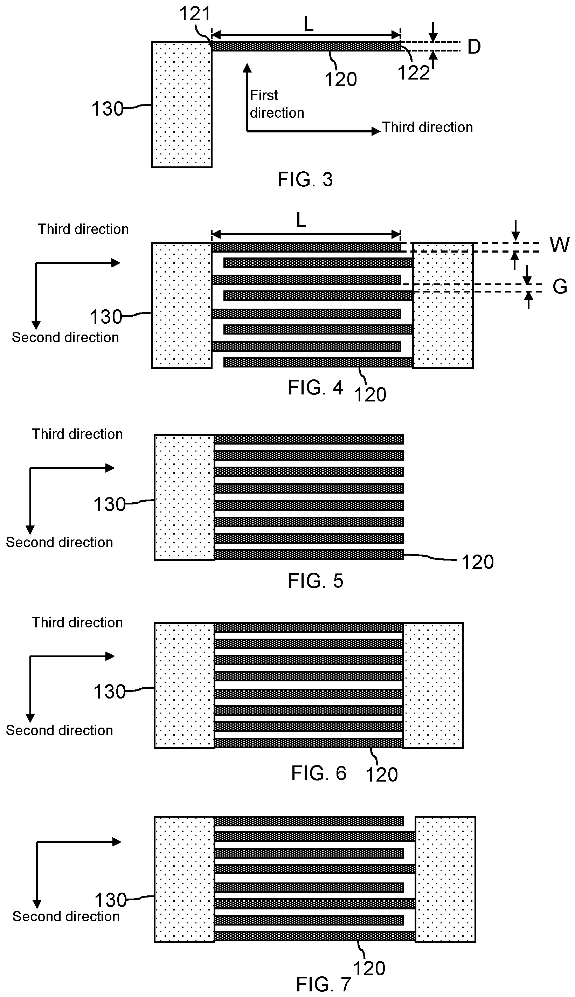

In some embodiments, the beam structure 120 may be a cantilever beam fixed at one end (e.g., see FIG. 3). In some embodiments, the beam structure 120 may be a beam fixed at both ends (e.g., see FIG. 6). In some embodiments, the microphone 100 includes a plurality of beam structures 120, which are spaced apart along a second direction perpendicular to the first and third directions (see FIGs. 4-11). The gaps among the plurality of beam structures 120 allow air communication between the first cavity 111 and the second cavity 112. In some embodiments, the plurality of beam structures 120 may have various distribution patterns. For example, the plurality of beam structures 120 may be distributed as shown in FIGs. 4-17 or FIGs. 20-22. In some embodiments, the beam structure 120 includes only a single beam structure 120. In some embodiments, a beam structure 120 may be a cantilever beam with a fixed end fixed to the support member 130. A gap exists between the free end of the beam structure 120 and the support member 130 to allow air communication between the first cavity 111 and the second cavity 112. In some embodiments, a beam structure 120 may be a beam fixed at both ends, with a hole array to allow air communication between the first cavity 111 and the second cavity 112. For more details regarding the beam structure 120, refer to other parts of the present disclosure, such as FIGs. 3-22 and related descriptions.

In some embodiments, the beam structure 120 is provided with a piezoelectric transducer 140, which can receive the mechanical vibration of the beam structure 120 and generate an electrical signal. In some embodiments, when the microphone 100 includes a plurality of beam structures 120, to generate electrical signals in response to the vibrations of the plurality of beam structures 120, at least a portion of the beam structures 120 are provided with a piezoelectric transducer 140. For example, at least a portion of the plurality of beam structures 120 are provided with a piezoelectric transducer 140 to generate electrical signals in response to the vibrations of the plurality beam structures 120. As another example, each of the plurality of beam structures 120 is provided with a piezoelectric transducer 140 to generate electrical signals in response to the vibrations of each beam structure 120. In some embodiments, the piezoelectric transducer 140 includes a piezoelectric element. When the piezoelectric transducer 140 vibrates with the vibration of the beam structure 120, the piezoelectric element deforms, and due to the piezoelectric effect, the piezoelectric element generates corresponding electrical signals. In some embodiments, the piezoelectric element may be made of materials with piezoelectric effects, such as piezoelectric ceramics, piezoelectric crystals, piezoelectric polymers (e.g., polyvinylidene fluoride), or any combination thereof. In some embodiments, the piezoelectric element may have any shape, such as film-like, sheet-like, block-like, column-like, or any combination thereof. In some embodiments, the piezoelectric element may be a thin sheet shape adapted to the form of the beam structure 120. In some embodiments, the piezoelectric element may be directly attached to the beam structure 120 by bonding or deposition. In some embodiments, the piezoelectric element may be connected to the beam structure 120 by snapping or clipping. In some embodiments, the piezoelectric element may be attached to the beam structure 120 through physical or chemical deposition.

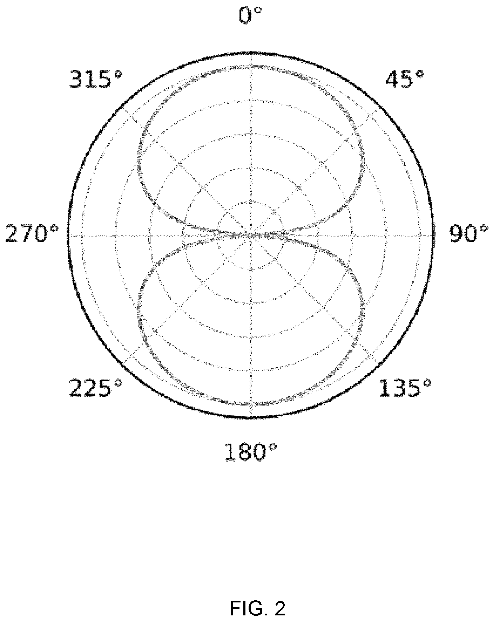

In some embodiments, when one or more beam structures 120 do not completely cover an opening of the support member 130, sound waves propagate through the air via gaps between adjacent beam structures 120 and/or gaps between the beam structures 120 and the support member 130. Air molecules flowing in different directions due to sound waves incident from varying directions generate viscous forces with distinct orientations. As a result, the beam structures 120 exhibit different amplitudes (e.g., displacements) under these viscous forces with distinct orientations, leading to differing amplitudes in the piezoelectric transducer 140. Consequently, the deformation of the piezoelectric element varies, producing electrical signals of varying strengths, thereby enabling directional recognition of the microphone 100. When sound waves are incident parallel to the vibration direction of the beam structures 120 (e.g., the first direction), since sound waves are longitudinal waves, the vibration direction of air molecules aligns with the propagation direction of the sound waves. Thus, during perpendicular incidence, the vibration direction of the air is perpendicular to the beam structures 120, creating a significant velocity difference that converts into viscous force, driving the beam structures 120 to vibrate intensely. Conversely, when sound waves are incident perpendicular to the vibration direction of the beam structures 120 (e.g., the second direction or the third direction), the vibration of air molecules in the vertical direction of the beam structures 120 is minimal, resulting in weaker vibrations of the beam structures 120. Therefore, the microphone 100 demonstrates superior directionality. FIG. 2 illustrates a response of the microphone 100 under different angles between the sound wave direction and the vibration direction of the beam structures 120 according to some embodiments of the present disclosure. As depicted in FIG. 2, the microphone 100 exhibits a weakest electrical signal (e.g., a poorest acoustic response) when sound waves are incident at 90° and 270° relative to the vibration direction of the beam structures 120 (e.g., perpendicular incidence). In contrast, a strongest electrical signal (e.g., an optimal acoustic response) occurs when sound waves are incident at 0° and 180° (e.g., parallel incidence).

In some embodiments, since the microphone 100 is highly sensitive to the direction of sound wave incidence, the first sound guiding hole 1111 and the second sound guiding hole 1121 may be positioned directly opposite the beam structures 120 to avoid influencing the direction of sound wave entry.

It should be noted that the above description of the microphone 100 is merely exemplary and should not limit the scope of the present disclosure to the embodiments. In some embodiments, the support member 130 may not be limited to a structure independent of the housing 110.

FIG. 3 is a schematic diagram of an exemplary beam structure according to some embodiments of the present disclosure. As illustrated in FIG. 3, the beam structure 120 is a cantilever beam, with one end being a fixed end 121 and the other end, extending away from the fixed end 121 in the third direction, being a free end 122.

The fixed end 121 refers to a position on the beam structure 120 where a vibration acceleration is less than a vibration acceleration threshold or an acceleration level is less than an acceleration level threshold under a working state, and a rotation angle of a cross-section of the beam structure 120 is less than a rotation angle threshold. Merely as an example, the vibration acceleration level at the fixed end 121 may be less than 5 dB, 3 dB, 1 dB, 0.8 dB, 0.6 dB, 0.4 dB, 0.2 dB, 0.05 dB, etc., and the rotation angle of the cross-section may be less than 3°, 2°, 1°, 0.5°, 0.2°, 0.05°, etc. In some embodiments, the fixed end 121 is connected to the support member 130. The free end 122 refers to an end of the beam structure 120 that vibrates freely. In some embodiments, the free end 122 may be in a suspended or unconstrained state.

In some embodiments, to enable the beam structure 120 to vibrate in response to the viscous force of air caused by sound waves, the material of the beam structure 120 may include one or more of polysilicon, silicon nitride, and silicon oxide. In some embodiments, the material of the beam structure 120 may be polysilicon.

Referring to FIG. 1, the "first direction" described in the present disclosure is the vibration direction of the beam structure 120 and also the thickness direction of the beam structure 120. The "second direction" described in the present disclosure is the arrangement direction of the beam structure 120 and also the width direction of the beam structure 120. The "third direction" described in the present disclosure is the direction perpendicular to the plane formed by the first and second directions and also the length direction of the beam structure 120.

In some embodiments, to enable the beam structure 120 to vibrate in response to the viscous force of air caused by sound waves, it is necessary to design the relevant structural parameters of the beam structure 120 so that these parameters fall within the range that the beam structure 120 can be driven by the viscous force of air. In some embodiments, the longer the beam structure 120 and the smaller the width (or thickness) of the beam structure 120 are, the higher the sensitivity of the beam structure 120 to sound wave vibrations, and correspondingly, the lower the acoustic impedance and the lower the resonant frequency of the microphone 100. Therefore, the relevant structural parameters of the beam structure 120, such as the length, the width, and the thickness, may be designed within a reasonable range to achieve a low acoustic impedance and a small corresponding resonant frequency. Here, the length of the beam structure 120 is a dimension L of the beam structure 120 along the third direction (see FIG. 3), the width of the beam structure 120 is a dimension W of the beam structure 120 along the second direction (see FIG. 4), and the thickness of the beam structure 120 is a dimension D of the beam structure 120 along the first direction (see FIG. 3).

In some embodiments, to improve the sensitivity of the beam structure 120, reduce the acoustic impedance, and lower the resonant frequency, a ratio of the length of the beam structure 120 to the width of the beam structure 120 may be within a range of 1 - 2000. Preferably, the ratio of the length of the beam structure 120 to the width of the beam structure 120 may be within a range of 10 - 2000. More preferably, the ratio of the length of the beam structure 120 to the width of the beam structure 120 may be within a range of 100 - 2000. Even more preferably, the ratio of the length of the beam structure 120 to the width of the beam structure 120 may be within a range of 200 - 2000.

In some embodiments, to improve the sensitivity of the beam structure 120, reduce acoustic impedance, and lower the resonant frequency, a ratio of the length of the beam structure 120 to the thickness of the beam structure 120 may be within a range of 1 - 2000. Preferably, the ratio of the length of the beam structure 120 to the thickness of the beam structure 120 may be within a range of 10 - 2000. More preferably, the ratio of the length of the beam structure 120 to the thickness of the beam structure 120 may be within a range of 80 - 2000. Even more preferably, the ratio of the length of the beam structure 120 to the thickness of the beam structure 120 may be within a range of 100 - 2000. Most preferably, the ratio of the length of the beam structure 120 to the thickness of the beam structure 120 may be within a range of 200 - 2000.

In some embodiments, to ensure that the dimensions of the beam structure 120 meet the requirements for a lightweight and compact design of the microphone 100, while also improving the sensitivity of the beam structure 120, reducing acoustic impedance, and lowering the resonant frequency, the length L of the beam structure 120 may be within a range of 1 µm - 2000 µm. Preferably, the length L of the beam structure 120 may be within a range of 10 µm - 2000 µm. More preferably, the length L of the beam structure 120 may be within a range of 100 µm - 2000 µm.

In some embodiments, to improve the sensitivity of the beam structure 120, reduce acoustic impedance, and lower the resonant frequency, the width W of the beam structure 120 may be within a range of 1 µm - 100 µm. Preferably, the width W of the beam structure 120 may be within a range of 5 µm - 80 µm. More preferably, the width W of the beam structure 120 may be within a range of 10 µm - 50 µm.

In some embodiments, to enhance the sensitivity of the beam structure 120, reduce acoustic impedance, and lower the resonant frequency, the thickness D of the beam structure 120 may be within a range of 0.1 µm - 10 µm. Preferably, the thickness D of the beam structure 120 may be within a range of 0.1 µm - 8 µm. More preferably, the thickness D of the beam structure 120 may be within a range of 0.2 µm - 5 µm.

In some embodiments, based on the ratio of the length to the width and the ratio of the length to the thickness of each beam structure, the thickness of each beam structure may be determined first, and the length and the width of each beam structure are determined based on the thickness of each beam structure. It should be understood that the above descriptions of structural parameters such as the length, the width, and the thickness of the beam structure 120 apply not only to each beam structure 120 when the microphone 100 includes a plurality of beam structures 120 but also to the beam structure 120 when the microphone 100 includes a single beam structure 120.

In some embodiments, the microphone 100 includes a plurality of beam structures 120 spaced apart along the second direction. The smaller the gap G (see FIG. 4) between adjacent beam structures 120 in the second direction is, the denser the arrangement of a plurality of beam structures 120 in the second direction is, resulting in a larger contact area with passing sound waves and thus greater air viscous force driving the beam structures 120. This enhances the sensitivity of the beam structures 120 to the driving of the air viscosity force. However, the gap between adjacent beam structures 120 should not be too small, as an excessively small gap may impede free airflow between the beam structures 120, creating a sound pressure difference within the first cavity 111 and the second cavity 112. Therefore, in some embodiments, to ensure that the plurality of beam structures 120 can vibrate under the influence of air viscous force, the gap G between adjacent beam structures 120 in the second direction may be within a range of 10 µm - 100 µm. Preferably, the gap G may be within a range of 20 µm - 80 µm. More preferably, the gap G may be within a range of 30 µm - 60 µm.

Since the length, the width, and/or the thickness of the beam structure 120 affect the resonant frequency of the microphone 100, when the microphone 100 includes a plurality of beam structures 120, a ratio of the length to the width of each beam structure 120 may be equal to improve sensitivity in a specific frequency range. The ratio of the length to the width of each beam structure 120 may be determined based on a desired frequency range for sensitivity improvement. In some embodiments, to achieve high sensitivity across a plurality of frequency ranges, the ratio of the length to the width of each beam structure 120 among the plurality of beam structures 120 may not be entirely equal or may be completely unequal. For example, a portion of beam structures 120 may have the same ratio of the length to the width, while others may have different ratios of length to width. As another example, each beam structure 120 may have a unique ratio of the length to the width.

To enhance sensitivity within a specific frequency range, the ratio of the length to the thickness of each beam structure 120 among the plurality of beam structures 120 may be equal. The ratio of the length to the thickness of each beam structure 120 may be determined based on the desired frequency range for sensitivity improvement. In some embodiments, to achieve high sensitivity across the plurality of frequency ranges, the ratio of the length to the thickness of each beam structure 120 among the plurality of beam structures 120 may not be entirely equal or may be completely unequal. For example, a portion of beam structures 120 may have the same ratio of the length to the thickness, while others may have different ratios of length to thickness. As another example, each beam structure 120 may have a unique ratio of the length to the thickness.

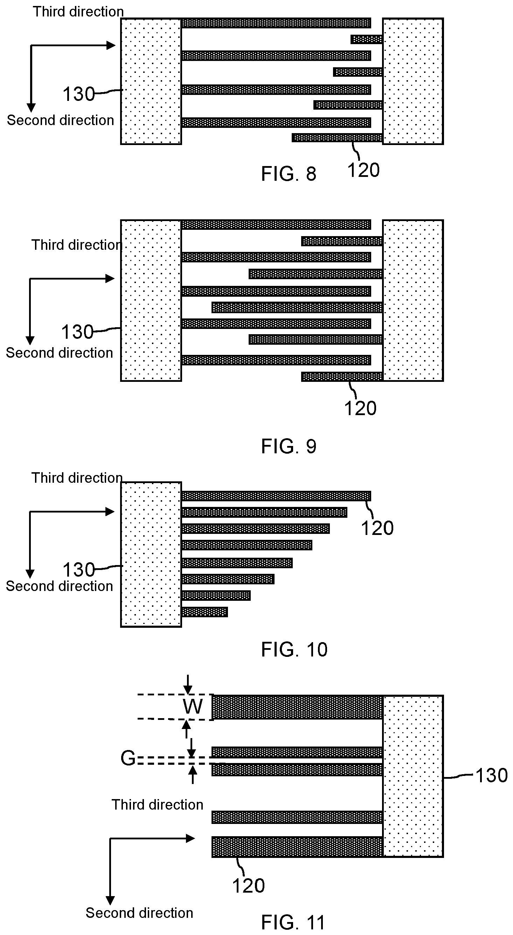

FIG. 4 is an exemplary distribution diagram of a plurality of beam structures according to some embodiments of the present disclosure. FIG. 5 is an exemplary distribution diagram of a plurality of beam structures according to some embodiments of the present disclosure. FIG. 6 is an exemplary distribution diagram of a plurality of beam structures according to some embodiments of the present disclosure. FIG. 7 is an exemplary distribution diagram of a plurality of beam structures according to some embodiments of the present disclosure. FIG. 8 is an exemplary distribution diagram of a plurality of beam structures according to some embodiments of the present disclosure. FIG. 9 is an exemplary distribution diagram of a plurality of beam structures according to some embodiments of the present disclosure. FIG. 10 is an exemplary distribution diagram of a plurality of beam structures according to some embodiments of the present disclosure. FIG. 11 is an exemplary distribution diagram of a plurality of beam structures according to some embodiments of the present disclosure.

To enhance sensitivity within a specific frequency range, the length L of each beam structure 120 among the plurality of beam structures 120 may be equal (as shown in FIGs. 4-7). The length L of each beam structure 120 may be determined based on the desired frequency range for sensitivity improvement. In some embodiments, to achieve high sensitivity across the plurality of frequency ranges, the length L of each beam structure 120 among the plurality of beam structures 120 may not be entirely equal or completely unequal. For example, a portion of the plurality of beam structures 120 may have equal lengths L, while others may have unequal lengths L. As another example, as shown in FIGs. 8-10, the length L of each beam structure 120 may all be unequal.

To enhance sensitivity within a specific frequency range, the width W of each beam structure 120 among the plurality of beam structures 120 may be equal (as shown in FIGs. 4-10). The width W of each beam structure 120 may be determined based on the desired frequency range for sensitivity improvement. In some embodiments, to achieve high sensitivity across the plurality of frequency ranges, the width W of each beam structure 120 among the plurality of beam structures 120 may not be entirely equal or completely unequal. For example, a portion of beam structures 120 may have equal widths W, while others may have unequal widths W. As another example, as shown in FIG. 11, the width W of each beam structure 120 may all be unequal.

To enhance sensitivity within a specific frequency range, the thickness D of each beam structure 120 among the plurality of beam structures 120 may be equal. The thickness D of each beam structure 120 may be determined based on the desired frequency range for sensitivity improvement. In some embodiments, to achieve high sensitivity across the plurality of frequency ranges, the thickness D of each beam structure 120 among the plurality of beam structures 120 may not be entirely equal or completely unequal. For example, the thickness D of a portion of the plurality of beam structures 120 may be equal, while others may have unequal thicknesses D. As another example, the thickness D of each beam structure 120 may all be unequal.

To ensure that the plurality of beam structures 120 produce relatively uniform vibration amplitudes when driven by air molecules, the gap G between each pair of adjacent beam structures 120 in the second direction may be equal (as shown in FIGs. 4-10). In some embodiments, to enhance the vibration amplitude of a portion of beam structures 120 (or reduce the vibration amplitude of the remaining beam structures), the gap G between each pair of adjacent beam structures 120 may not be entirely equal or completely unequal. For example, the gap G between some adjacent beam structures 120 may be equal, while the gap G between others may be unequal. As another example, as shown in FIG. 11, the gap G between each pair of adjacent beam structures 120 may all be unequal.

In some embodiments, since the primary frequency range of human voice is below 20 kHz (e.g., within the 20 Hz-20 kHz range), to ensure the microphone 100 can cover this frequency range, the resonant frequency of at least a portion of beam structures 120 among the plurality of beam structures 120 is less than 20 kHz. In some embodiments, to ensure the plurality of beam structures 120 exhibit good vibration response across the primary frequency range of human voice, the resonant frequency range of at least a portion of beam structures 120 among the plurality of beam structures 120 may be less than 10 kHz. Preferably, the resonant frequency range of at least a portion of beam structures 120 among the plurality of beam structures 120 may be less than 5 kHz. More preferably, the resonant frequency range of at least a portion of beam structures 120 may be less than 4 kHz. Even more preferably, the resonant frequency range of at least a portion of beam structures 120 may be less than 3.2 kHz. Most preferably, the resonant frequency range of at least a portion of beam structures 120 may be less than 2.8 kHz.

In some embodiments, the ratio of the length to the width, the ratio of the length to the thickness, the length, the width, and/or the thickness of the beam structure 120 affect the resonant frequency. Therefore, when the ratio of the length to the width, the ratio of the length to the thickness, the length, the width, and/or the thickness of the beam structure 120 vary, the corresponding resonant frequency also differs. For example, when the ratio of the length to the width of the beam structure 120 is large (e.g., within a range of 1000 - 2000), the ratio of the length to the thickness is large (e.g., within a range of 1000 - 2000), the length is great (e.g., within a range of 1000 µm - 2000 µm), the width is small (e.g., within a range of 1 µm - 50 µm), and/or the thickness is small (e.g., within a range of 1 µm - 5 µm), the corresponding resonant frequency is low (e.g., less than 2k Hz). Conversely, when the ratio of the length to the width is small (e.g., within a range of 1 - 1000), the ratio of the length to the thickness is small (e.g., within a range of 0 - 1000), the length is short (e.g., within a range of 1 µm - 1000 µm), the width is large (e.g., within a range of 50 µm - 100 µm), and/or the thickness is great (e.g., within a range of 5 µm - 10 µm), the corresponding resonant frequency is high (e.g., within a range of 2k Hz - 4k Hz). As another example, when the ratio of the length to the width of the beam structure 120 is large (e.g., within the range of 1000 - 2000) and the ratio of the length to the thickness is large (e.g., within the range of 1000 - 2000), the corresponding resonant frequency is low (e.g., less than 2k Hz). Conversely, when the ratio of the length to the width is small (e.g., within the range of 1 - 1000) and the ratio of the length to the thickness is small (e.g., within the range of 0 - 1000), the corresponding resonant frequency is high (e.g., within the range of 2k Hz - 4k Hz). As yet another example, when the length of the beam structure 120 is fixed, and the width is small (e.g., within the range of 1 µm - 50 µm) and the thickness is small (e.g., within the range of 1 µm - 5 µm), the corresponding resonant frequency is low (e.g., less than 2k Hz). Conversely, when the width is large (e.g., within the range of 50 µm - 100 µm) and the thickness is great (e.g., within the range of 5 µm - 10 µm), the corresponding resonant frequency is high (e.g., within the range of 2k Hz - 4k Hz). As yet another example, when the width of the beam structure 120 is fixed, the large the length of the beam structure 120 (e.g., when the length is within the range of 1000 µm - 2000 µm) and the small the thickness of the beam structure 120 (e.g., when the thickness is within the range of 1 µm - 5 µm), the low the corresponding resonant frequency (e.g., less than 2 kHz). Conversely, the small the length of the beam structure 120 (e.g., when the length is within the range of 1 µm - 1000 µm) and the large the thickness of the beam structure 120 (e.g., when the thickness is within the range of 5 µm - 10 µm), the high the corresponding resonant frequency (e.g., within the range of 2k Hz - 4k Hz).

In some embodiments, as shown in FIG. 4, a plurality of beam structures 120 are spaced apart in the second direction, with a gap G between adjacent beam structures 120. Each beam structure 120 is a cantilever beam, with a fixed end connected to one sidewall of the support member 130 and a free end extending toward an opposite sidewall. The plurality of beam structures 120 fixed on opposite sides of the support member 130 along the third direction are staggered. In some embodiments, as shown in FIG. 5, a plurality of beam structures 120 are spaced apart in the second direction. Each beam structure 120 is a cantilever beam, and the fixed ends of the plurality of cantilever beams are connected to a same sidewall of the support member 130. In some embodiments, as shown in FIG. 6, a plurality of beam structures 120 are spaced apart in the second direction, with both ends of each beam structure 120 fixed to the opposite sidewalls of the support member 130 along the third direction. In some embodiments, as shown in FIG. 7, a plurality of beam structures 120 are spaced apart in the second direction. Among them, a portion of beam structures 120 are single-end-fixed cantilever beams (also referred to as a plurality of first beam structures 120), while others are double-end-fixed beam structures (also referred to as a plurality of second beam structures 120). The fixed end of each first beam structure 120 is attached to one sidewall of the support member 130, and both ends of each second beam structure 120 are fixed to the opposite sidewalls of the support member 130 along the third direction. The plurality of first beam structures 120 and the plurality of second beam structures are alternately spaced along the second direction. For example, one of two adjacent beam structures 120 is a first beam structure 120 (e.g., a single-end-fixed cantilever beam), with a fixed end connected to one sidewall of the support member 130 and a free end extending toward the opposite sidewall, while the other is a second beam structure 120 (e.g., a double-end-fixed beam structure), with both ends along the third direction connected to the opposite sidewalls of the support member 130.

In some embodiments, as shown in FIG. 8, the distribution of a plurality of beam structures 120 in FIG. 8 is similar to that in FIG. 4, with the difference being: on one side of the support member 130 along the third direction, the lengths L of a plurality of beam structures 120 are equal, while on the other side of the support member 130 along the third direction, the lengths L of a plurality of beam structures 120 are unequal (for example, as shown in FIG. 8, along the second direction, the lengths L of the plurality of beam structures 120 on the other side of the support member 130 along the third direction increase progressively). In some embodiments, as shown in FIG. 9, the distribution of a plurality of beam structures 120 in FIG. 9 is similar to that in FIG. 8, with the difference being: the lengths L of the plurality of beam structures 120 on the other side of the support member 130 along the third direction first increase and then decrease along the second direction. In some embodiments, as shown in FIG. 10, the distribution of a plurality of beam structures 120 in FIG. 10 is similar to that in FIG. 5, with the difference being: the lengths L of a plurality of beam structures 120 on one side of the support member 130 are different (for example, decreasing along the second direction). The beam structures 120 shown in FIGs. 8-10 have different lengths L, resulting in different resonant frequencies and responses to different sound wave frequencies. By designing beam structures 120 with different lengths L, the microphone 100 can achieve good sensitivity to sound frequencies across different frequency ranges.

In some embodiments, as shown in FIG. 11, the distribution of a plurality of beam structures 120 in FIG. 11 is similar to that in FIG. 5 or FIG. 10, with the difference being: at least a portion of the beam structures 120 have different widths W, and at least a portion of adjacent beam structures 120 have different gaps G. The different widths W of the beam structures 120 result in different resonant frequencies and responses to different sound wave frequencies. By designing beam structures 120 with different widths W, the microphone 100 can achieve good sensitivity to sound frequencies across different frequency ranges. The different gaps G between adjacent beam structures 120 lead to significant differences in vibration amplitudes. By designing beam structures 120 with different adjacent gaps G, the vibration amplitude of a portion of beam structures 120 may be enhanced (or the vibration amplitude of other beam structures may be weakened).

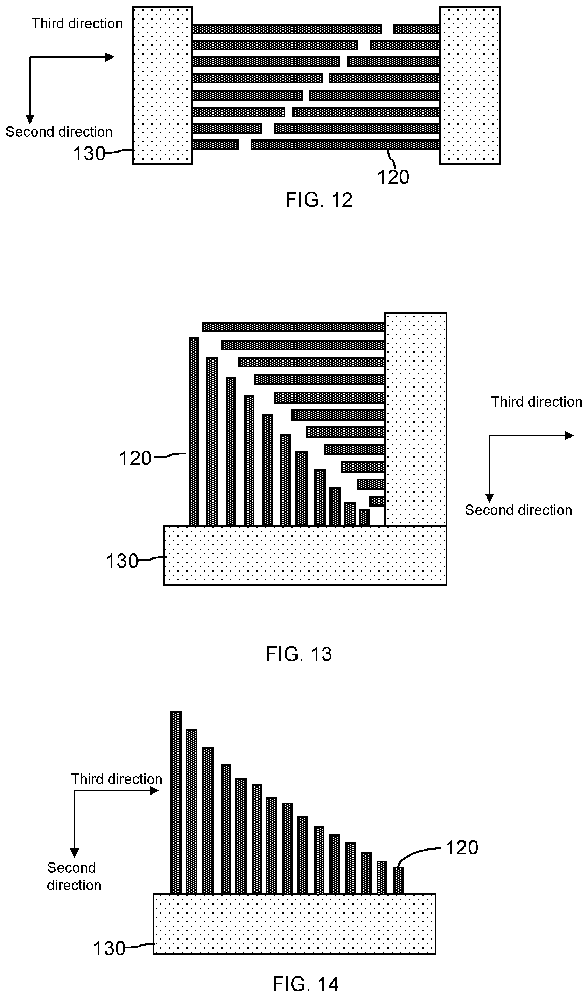

Different distribution patterns of a plurality of beam structures 120 are shown in FIGs. 12-17. In some embodiments, as shown in FIG. 12, a plurality of beam structures 120 are spaced apart along the second direction. The beam structures 120 are cantilever beams fixed at one end. One group of beam structures 120 (also referred to as third beam structures 120) have fixed ends connected to one sidewall of the support member 130, while another group of beam structures 120 (also referred to as fourth beam structures 120) have fixed ends connected to the opposite sidewall of the support member 130 along the third direction. The free ends of the third beam structures 120 and the fourth beam structures 120 are arranged opposite in a one-to-one correspondence. Here, "one-to-one correspondence" means that each third beam structure 120 has a corresponding fourth beam structure 120 opposite to the third beam structure 120, and the centerlines of the pairs of beam structures are aligned along the second direction. In some embodiments, as shown in FIG. 12, the lengths L of a plurality of beam structures 120 (also referred to as third beam structures 120) on one side of the support member 130 along the third direction decrease along the second direction, while the lengths L of a plurality of beam structures 120 (also referred to as fourth beam structures 120) on the other side of the support member 130 increase along the second direction. In some embodiments, the longest beam structure 120 on one side has the same length L as the longest beam structure 120 on the other side, and the shortest beam structure 120 on one side has the same length L as the shortest beam structure 120 on the other side.

In some embodiments, as shown in FIG. 13, a plurality of beam structures 120 are arranged on two mutually perpendicular sides of the support member 130. The beam structures 120 are cantilever beams fixed at one end. A plurality of beam structures 120 fixed on one of the mutually perpendicular sides of the support member 130 are spaced apart in the third direction, and a plurality of beam structures 120 fixed on the other side are spaced apart in the second direction. In some embodiments, the lengths L of the plurality of beam structures 120 distributed on one side decrease along the second direction, while the lengths L of the plurality of beam structures 120 distributed on the other side decrease along the third direction. In some embodiments, the lengths L of the longest beam structure 120 and the shortest beam structure 120 among the plurality of beam structures 120 distributed on one side are the same as the lengths L of the longest beam structure 120 and the shortest beam structure 120 among the plurality of beam structures 120 distributed on the other side. In some embodiments, as shown in FIG. 14, a plurality of beam structures 120 are distributed on one side of the support member 130 extending in the third direction, and these beam structures 120 are spaced apart in the third direction. The beam structures 120 are single-end-fixed cantilever beams. The lengths L of the plurality of beam structures 120 distributed on the side of the support member 130 extending in the third direction may be the same or different (for example, as shown in FIG. 14, the lengths L of the plurality of beam structures 120 distributed on the side of the support member 130 extending in the third direction decrease along the third direction).

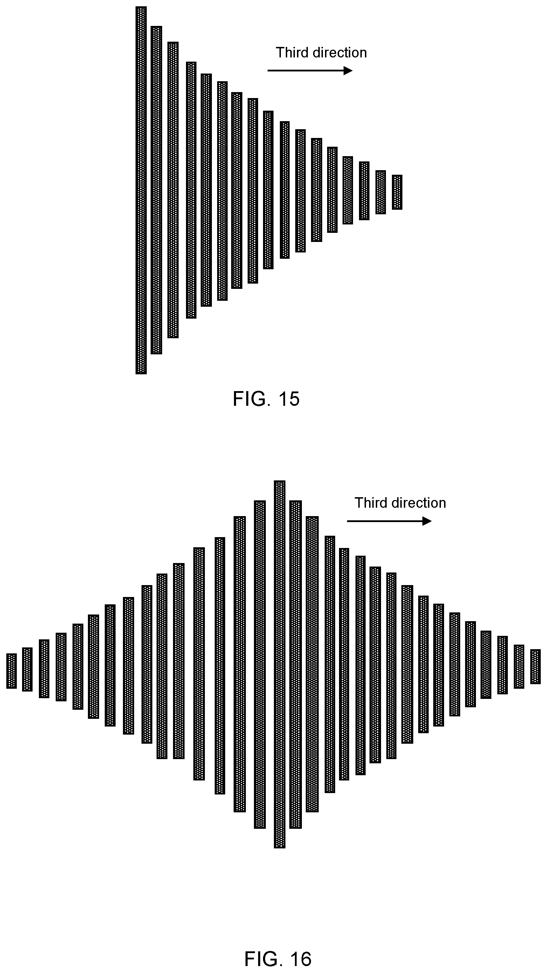

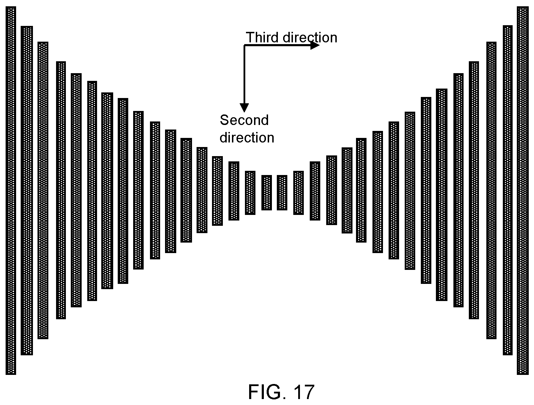

In some embodiments, as shown in FIG. 15, a plurality of beam structures 120 may also be spaced apart in the third direction, with varying lengths L (for example, the lengths L of the plurality of beam structures 120 decrease along the third direction). For example, the lengths L of the beam structures 120 may decrease exponentially in the third direction. In some embodiments, as shown in FIG. 16, a plurality of beam structures 120 may also be spaced apart in the third direction, with lengths L first increasing and then decreasing along the third direction. Specifically, the plurality of beam structures 120 are symmetrically distributed about a midline of the support member 130 in the third direction. In some embodiments, as shown in FIG. 17, a plurality of beam structures 120 may also be spaced apart in the third direction, with lengths L first decreasing and then increasing along the third direction. Specifically, the plurality of beam structures 120 are symmetrically distributed about the midline of the support member 130 in the third direction.

It should be understood that the distribution patterns of the plurality of beam structures 120 shown in FIGs. 4-17 are merely illustrative, and the implementation of the plurality of beam structures 120 is not limited to these. In one or more embodiments, the plurality of beam structures 120 may be arranged at the open end of the support member 130 in various planar or three-dimensional forms. Additionally, one or more of the length, the width, and/or the thickness of each beam structure 120 and the gap between adjacent beam structures 120 may be varied differently.

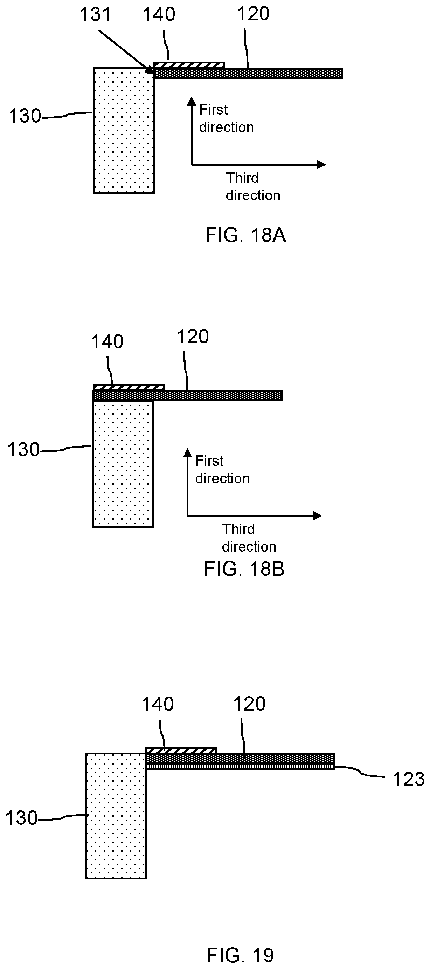

FIG. 18A is an exemplary distribution diagram of a piezoelectric transducer according to some embodiments of the present disclosure. As shown in FIG. 18A, the beam structure 120 is connected to the support member 130 at a connection portion 131. The connection portion 131 is located on a sidewall of the support member 130 along the third direction. The stress is greatest near the connection portion 131 where the beam structure 120 connects with the support member 130. Since the piezoelectric output is proportional to the stress, in some embodiments, as shown in FIG. 18A, to enable the piezoelectric transducer 140 to generate a larger piezoelectric output, the piezoelectric transducer 140 is arranged near the connection portion 131 between the beam structure 120 and the support member 130. In some embodiments, to maximize the piezoelectric output of the piezoelectric transducer 140, the distance between the piezoelectric transducer 140 and the connection portion 131 is within a range of 0 µm to 100 µm. The distance between the piezoelectric transducer 140 and the connection portion 131 refers to a distance in the third direction between the side of the piezoelectric transducer 140 closest to the connection portion 131 and the connection portion 131. In some embodiments, the distance between the piezoelectric transducer 140 and the connection portion 131 is within a range of 0 µm - 50 µm. In some embodiments, to achieve a larger piezoelectric output from the piezoelectric transducer 140, the distance between the piezoelectric transducer 140 and the connection portion 131 is 0 µm, meaning the side of the piezoelectric transducer 140 closest to the connection portion 131 coincides with the connection portion 131 in the third direction. In some embodiments, to ensure a larger piezoelectric output from the piezoelectric transducer 140, a ratio of the distance between the piezoelectric transducer 140 and the connection portion 131 to a length of the beam structure 120 where the piezoelectric transducer 140 is located is less than 1/2. For example, the ratio may be less than 1/3. As another example, the ratio may be less than 1/4.

FIG. 18B is an exemplary distribution diagram of a piezoelectric transducer according to some embodiments of the present disclosure. As shown in FIG. 18B, the beam structure 120 is connected to the support member 130 at the connection portion 131. The connection portion 131 is located on the sidewall of the support member 130 along the first direction.

In some embodiments, a piezoelectric area of the piezoelectric transducer 140 is related to a conversion efficiency in transforming mechanical vibrations into electrical signals. A small piezoelectric area results in a low conversion efficiency. The piezoelectric area refers to a projection area along the first direction of the piezoelectric element within the piezoelectric transducer 140 that senses mechanical vibrations from the beam structure 120, undergoes deformation, and generates electrical signals. The piezoelectric area is consistent with the projection area of the piezoelectric transducer 140 along the first direction. Therefore, in some embodiments, to ensure high conversion efficiency and significant deformation, the piezoelectric transducer 140 is positioned close to the connection portion 131, and the piezoelectric area should be large. In some embodiments, a projection area ratio of the piezoelectric transducer 140 on the beam structure 120 where the piezoelectric transducer 140 is installed is within a range of 1/10 - 1. The projection area ratio is defined as a ratio of the projection area of the piezoelectric transducer 140 along the first direction to the projection area of the beam structure 120 along the same direction. Additionally, the deformation of a part of the beam structure 120 far from the connection portion 131 of the support member 130 is relatively small, resulting in weak electrical signals and a low efficiency in arranging piezoelectric materials. Thus, to ensure high conversion efficiency and significant deformation, the projection area ratio of the piezoelectric transducer 140 on the beam structure 120 where the piezoelectric transducer 140 is installed is within a range of 1/10 - 2/3 (e.g., the piezoelectric transducer 140 only covers a portion of the beam structure 120 rather than fully covering the beam structure 120). More preferably, to position the piezoelectric transducer 140 closer to the connection portion 131, the projection area ratio is within a range of 1/3 - 1/2.

In some embodiments, the material of the piezoelectric transducer 140 may include one or more piezoelectric materials such as zinc oxide (ZnO), tin oxide (SnO), lead zirconate titanate (PZT), zinc stannate (ZnSnO₃), polyvinylidene fluoride (PVDF), poly(vinylidene fluoride-trifluoroethylene), aluminum nitride (AIN), and PMN-PT. In some embodiments, to reduce the acoustic impedance of the piezoelectric transducer 140 and thereby lower the resonant frequency of the beam structure 120, the material of the piezoelectric transducer 140 may include one or more flexible piezoelectric materials such as lead zirconate titanate (PZT) and polyvinylidene fluoride (PVDF). In some embodiments, to further reduce the acoustic impedance of the beam structure 120 and lower the resonant frequency, the material of the beam structure 120 may include one or more flexible piezoelectric materials such as lead zirconate titanate (PZT) and polyvinylidene fluoride (PVDF). In such cases, the beam structure 120 and the piezoelectric transducer 140 may be designed as an integrated unit.

In some embodiments, due to a considerable length of the beam structure 120, the internal stress of the beam structure 120 is significant, which may cause warping of the beam structure 120 after processing release. To adjust the shape of the beam structure 120 after processing release, the beam structure 120 may include a stress regulation layer 123. A direction of internal stress of the stress regulation layer 123 is opposite to the direction of the internal stress of the beam structure 120, enabling the straightened correction of a warped beam structure 120. FIG. 19 is a schematic diagram illustrating a structure of a beam structure according to some embodiments of the present disclosure. In some embodiments, as shown in FIG. 19, the stress regulation layer 123 is configured to match the shape of the beam structure 120 and may be attached (e.g., adhered) to a lower side of the beam structure 120 near the second cavity 112. In some embodiments, the stress regulation layer 123 may also be attached (e.g., adhered) to an upper side of the beam structure 120 near the first cavity 111. In some embodiments, the stress regulation layer 123 may be attached to both the upper side near the first cavity 111 and the lower side near the second cavity 112. A material for the stress regulation layer 123 includes one or more semiconductor sputtering materials such as silicon nitride, silicon oxide, etc.

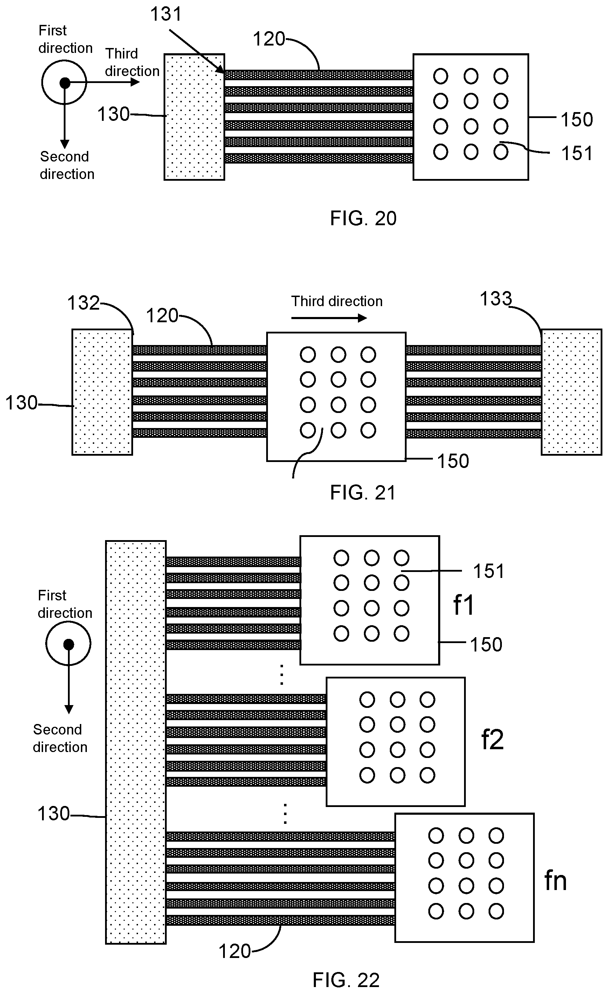

FIG. 20 is a schematic diagram of a vibration sensing portion according to some embodiments of the present disclosure.

In some embodiments, since the deformation at an end of the beam structure 120 away from the connection portion 131 with the support member 130 (e.g., the free end) is relatively small, as illustrated in FIG. 20, one end of the beam structure 120 is fixed to the support member 130, while the other end away from the connection portion 131 is linked to the vibration sensing portion 150. The vibration sensing portion 150 may vibrate in response to sound waves, thereby driving the beam structure 120 to vibrate and increasing the contact area of the beam structure 120 with the airflow induced by sound waves, resulting in a great vibrational displacement of the beam structure 120. In some embodiments, the vibration sensing portion 150 may take the form of a sheet, a membrane, a block, a columnar structure, etc. To achieve a large vibrational displacement of the vibration sensing portion 150 and consequently great vibrational displacement of the beam structure 120, a hole array 151 may be formed on the vibration sensing portion 150. The hole array 151 consists of a plurality of micro-holes arranged in an array, with openings of the plurality of micro-holes aligned along a first direction to accommodate the flow direction of air molecules. As the movement of air molecules generates viscous forces, the vibration sensing portion 150 vibrates up and down under the influence of the viscous forces. The hole array 151 on the vibration sensing portion 150 reduces the resistance encountered by sound waves passing through the vibration sensing portion 150, allowing sound waves to pass with minimal loss. In this scenario, the air viscous forces significantly impact the vibration sensing portion 150, driving the vibration sensing portion 150 to vibrate with large amplitudes.

In some embodiments, to allow sound waves to pass through the vibration sensing portion 150 with minimal loss (e.g., where the vibration velocity of air molecules in each aperture is close to the vibration velocity of air molecules in the external environment, maximizing the effect of viscous forces from air molecules), while ensuring sufficient contact area between the sound waves and the micro-holes on the vibration sensing portion 150, an aperture of the micro-holes on the vibration sensing portion 150 may be within a range of 5 µm - 50 µm. For example, the aperture of the micro-holes on the vibration sensing portion 150 may be within a range of 10 µm - 40 µm. As another example, the aperture of the micro-holes on the vibration sensing portion 150 may be within a range of 15 µm - 30 µm. As yet another example, the aperture of the micro-holes on the vibration sensing portion 150 may be within a range of 20 µm - 25 µm. In some embodiments, to minimize sound wave loss when passing through the vibration sensing portion 150, the gap between two adjacent micro-holes in the hole array 151 may be within a range of 0.1 µm - 50 µm. For example, the gap between two adjacent micro-holes in the hole array 151 may be within a range of 1 µm - 40 µm. As another example, the gap between two adjacent micro-holes in the hole array 151 may be within a range of 2 µm - 30 µm. As yet another example, the gap between two adjacent micro-holes in the hole array 151 may be within a range of 5 µm - 20 µm.

In some embodiments, to enable the beam structure 120 to vibrate in response to air viscous forces while allowing the vibration sensing portion 150 to drive the beam structure 120 into large-amplitude vibrations, a ratio of the length of each beam structure 120 to the length of a connected vibration sensing portion 150 in the third direction should fall within an appropriate range. If the length of the beam structure 120 in the third direction is too large, the size of the vibration sensing portion 150 may become too small to effectively vibrate in response to air viscous forces. Conversely, if the length of the beam structure 120 in the third direction is too small, the resonant frequency of a vibration system formed by the beam structure 120 and the vibration sensing portion 150 may become too high, deviating from the primary frequency range of human voices. In some embodiments, a ratio of the length of the beam structure 120 to the length of the vibration sensing portion 150 may be within a range of 0.5 - 10. For example, the ratio of the length of the beam structure 120 to the length of the vibration sensing portion 150 may be within a range of 0.5 - 5. As another example, the ratio of the length of the beam structure 120 to the length of the vibration sensing portion 150 may be within a range of 0.5 - 2.

In some embodiments, to increase the viscous force of air molecules acting on the vibration sensing portion 150, thereby generating large vibration amplitudes in the beam structure 120, the area of the vibration sensing portion 150 should be as large as possible. To achieve this, in some embodiments, a projection area of the vibration sensing portion 150 in the first direction is greater than a projection area of the connected beam structure 120 in the first direction. The projection area of the vibration sensing portion 150 in the first direction refers to a sum of the projection areas of all micro-holes in the hole array 151 and all non-perforated portions of the vibration sensing portion 150 in the first direction. In some embodiments, when a plurality of beam structures 120 are connected to a single vibration sensing portion 150, the projection area of the connected beam structures 120 in the first direction refers to a sum of the projection areas of all connected beam structures 120 in the first direction.

In some embodiments, the microphone 100 includes a plurality of beam structures 120. At least a portion of the beam structures 120 are connected to the first sidewall of the support member 130, while another portion of the beam structures 120 are connected to the second sidewall of the support member. The first sidewall and the second sidewall are different sidewalls of the support member 130. For example, the first sidewall and the second sidewall may be two opposing sidewalls along a third direction. As another example, the first sidewall and the second sidewall may be two sidewalls perpendicular to each other. FIG. 21 is a schematic diagram illustrating a connection between the vibration sensing portion and the beam structure according to some embodiments of the present disclosure. As shown in FIG. 21, a portion of beam structures 120 are connected to the first sidewall 132 of the support member 130, while another portion of the beam structures 120 are connected to the second sidewall 133 of the support member 130. The first sidewall 132 and the second sidewall 133 are two opposing sidewalls along the third direction. In some embodiments, as shown in FIG. 21, at least a portion of the beam structures 120 located on different sidewalls of the support member 130 are connected to the same vibration sensing portion 150.

In some embodiments, referring to FIG. 20, the plurality of beam structures 120 are located on the same sidewall of the support member 130. One end of each beam structure 120 is connected to the sidewall of the support member 130, while the other end of the each beam structure 120 is connected to the same vibration sensing portion 150. In some embodiments, referring to FIG. 21, the plurality of beam structures 120 are located on different sidewalls of the support member 130. One end of each beam structure 120 is connected to the sidewall of the support member 130, while the other end of the each beam structure 120 is connected to the same vibration sensing portion 150. In some embodiments, the plurality of beam structures 120 are distributed around the vibration sensing portion 150. For example, the plurality of beam structures 120 may be distributed on an inner wall of a cylindrical support member 130, with one end of each beam structure connected to the inner wall of the support member and the other end connected to the vibration sensing portion 150, forming a distribution that surrounds the vibration sensing portion 150.

In some embodiments, the plurality of beam structures 120 may be connected to different vibration sensing portions 150. For example, the plurality of beam structures 120 include a plurality of groups of beam structures 120, and the vibration sensing portion 150 correspondingly includes a plurality of vibration sensing portions 150. Each vibration sensing portion 150 among the plurality of vibration sensing portions is connected to one group of beam structures 120 among the plurality of groups of beam structures 120. In some embodiments, the number of beam structures 120 in each group may be the same or different.

FIG. 22 is a schematic diagram illustrating a connection between the vibration sensing portion and the beam structure according to some embodiments of the present disclosure. To ensure that the microphone 100 achieves high sensitivity across a plurality of audio frequency ranges, the resonant responses for different frequency ranges may be adjusted by modifying a projection area of each vibration sensing portion 150 along the first direction and the length of the beam structures 120 included in each group. In some embodiments, as shown in FIG. 22, each group of beam structures 120 is connected to a corresponding vibration sensing portion 150, forming a microphone unit. A plurality of groups of beam structures 120 and corresponding vibration sensing portions 150 respectively form a plurality of microphone units. In some embodiments, the length of each group of beam structures 120 differs. For example, the lengths of the plurality of groups of beam structures 120 arranged along the second direction increase progressively along the second direction. In some embodiments, the projection area of each vibration sensing portion 150 in the first direction also differs. The projection area of the vibration sensing portion 150 affects the resonant frequency of the corresponding microphone unit. By varying the length of each group of beam structures 120 and/or the projection area of the corresponding vibration sensing portion 150 along the first direction, each microphone unit may be designed with a unique resonant frequency (e.g., f1, f2, ..., fn). This configuration enables the microphone 100 to adapt to sound reception across different frequency ranges while also achieving directional sensitivity for specific frequency ranges.

It should be noted that the structural parameters of the beam structures 120 shown in FIGs. 20-22 (e.g., ratio of the length to the width, ratio of the length to the thickness, the length, the width, the thickness, the gap between adjacent beam structures 120, etc.), the materials, the distribution patterns, as well as the piezoelectric transducer 140 and the stress regulation layer 123 arranged on the beam structures 120, may be implemented by referring to other embodiments in the present disclosure, such as those illustrated in FIGs. 4-19.

The potential benefits of the embodiments described in the present disclosure include, but are not limited to: (1) By arranging the beam structure and designing the piezoelectric transducer on the beam structure, the beam structure exhibits distinct vibrations under sound signals from different directions, thereby enabling directional sensitivity in the piezoelectric microphone. (2) By optimizing the structural parameters (e.g., the ratio of the length to the width, the ratio of the length to the thickness, the length, the width, the thickness, the gap between adjacent beam structures 120, etc.) and the material of the beam structures, the beam structures can effectively respond to air viscous forces induced by sound waves, enhancing the vibration sensitivity of the beam structures to improve the sensitivity of the microphone. (3) Adjusting the length, the width, the thickness, the ratio of the length to the width, and the ratio of the length to the thickness of the beam structure allows tuning of the resonant frequencies of the beam structure, ensuring the microphone meets specific frequency requirements. (4) By configuring the plurality of groups of beam structures and vibration sensing portions with tailored dimensions, the microphone achieves high sensitivity across a plurality of frequency ranges, adapting to diverse audio ranges while also enabling directional sound reception for different frequency ranges.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," or "one embodiment," or "an alternative embodiment" in various portions of this disclosure are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software-only solution, e.g., an installation on an existing server or mobile device.

Similarly, it should be appreciated that in the foregoing description of embodiments of the present disclosure, various features are sometimes grouped together in a single embodiment, figure, or description thereof to streamline the disclosure aiding in the understanding of one or more of the various inventive embodiments. This method of disclosure, however, is not to be interpreted as reflecting an intention that the claimed object matter requires more features than are expressly recited in each claim. Rather, inventive embodiments lie in less than all features of a single foregoing disclosed embodiment.

In some embodiments, the numbers expressing quantities, properties, and so forth, used to describe and claim certain embodiments of the application are to be understood as being modified in some instances by the term "about," "approximate," or "substantially." For example, "about," "approximate" or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting effect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A microphone, comprising:
a support member;
a plurality of beam structures, wherein one end of each beam structure of the plurality of beam structures is arranged on the support member, the plurality of beam structures vibrate along a first direction, at least a portion of the plurality of beam structures are provided with a piezoelectric transducer, the piezoelectric transducer is configured to generate an electrical signal in response to the vibration of the plurality of beam structures; and
a housing, configured to accommodate the support member and the plurality of beam structures, the housing forming a first cavity and a second cavity along the first direction on both sides of the plurality of beam structures, wherein the housing is provided with a first sound guiding hole and a second sound guiding hole, the first sound guiding hole is acoustically coupled with the first cavity, the second sound guiding hole is acoustically coupled with the second cavity, the plurality of beam structures are spaced apart in a second direction perpendicular to the first direction, and gaps among the plurality of beam structures allow air communication between the first cavity and the second cavity.

2. The microphone according to claim 1, wherein a ratio of a length of each beam structure of the plurality of beam structures to a width of the each beam structure is within a range of 10 - 2000.

3. The microphone according to claim 1 or claim 2, wherein a ratio of a length of each beam structure of the plurality of beam structures to a thickness of the each beam structure is within a range of 80 - 2000.

4. The microphone according to claim 2 or claim 3, wherein the length of the each beam structure of the plurality of beam structures is within a range of 1 µm - 2000 µm.

5. The microphone according to any one of claims 2-4, wherein the width of the each beam structure of the plurality of beam structures is within a range of 1 µm -100 µm.

6. The microphone according to any one of claims 2-5, wherein the thickness of the each beam structure of the plurality of beam structures is within a range of 0.1 µm - 10 µm.

7. The microphone according to any one of claims 1-6, wherein a gap between adjacent beam structures of the plurality of beam structures in the second direction is within a range of 10 µm - 100 µm.

8. The microphone according to any one of claims 1-7, wherein each beam structure of the plurality of beam structures has a same length.

9. The microphone according to any one of claims 1-7, wherein at least two of the plurality of beam structures have different lengths.

10. The microphone according to any one of claims 1-9, wherein the plurality of beam structures are located on different sidewalls of the support member.

11. The microphone according to any one of claims 1-10, wherein at least a portion of the plurality of beam structures have a resonant frequency of less than 20 kHz.

12. The microphone according to any one of claims 1-11, wherein a ratio of a distance between the piezoelectric transducer and a connection portion of the plurality of beam structures with the support member to a length of a beam structure where the piezoelectric transducer is located is less than 1/2.

13. The microphone according to any one of claims 1-12, wherein a projection area ratio of the piezoelectric transducer on a beam structure provided with the piezoelectric transducer is within a range of 1/10 - 1.

14. The microphone according to any one of claims 1-13, wherein the plurality of beam structures include a stress regulation layer.

15. The microphone according to any one of claims 1-14, wherein a material of the piezoelectric transducer includes at least one of zinc oxide, aluminum nitride, lead zirconate titanate (PZT), or polyvinylidene fluoride (PVDF) flexible piezoelectric material.

16. The microphone according to any one of claims 1-15, wherein an other end of at least a portion of the plurality of beam structures is connected to at least one vibration sensing portion, and the at least one vibration sensing portion is provided with a hole array.

17. The microphone according to claim 16, wherein an aperture of each hole in the hole array is within a range of 5 µm - 50 µm.

18. The microphone according to claim 16 or claim 17, wherein a gap between two adjacent holes in the hole array is within a range of 0.1 µm - 50 µm.

19. The microphone according to claim 16, wherein the plurality of beam structures includes a plurality of groups of beam structures, a count of the at least one vibration sensing portion is more than two, and each vibration sensing portion of the more than two vibration sensing portions is connected to one group of beam structures of the plurality of groups of beam structures.

20. The microphone according to claim 19, wherein projection areas of different vibration sensing portions of the more than two vibration sensing portions along the first direction are different.

21. The microphone according to claim 16, wherein a ratio of a length of each beam structure of the plurality of beam structures to a length of a vibration sensing portion connected thereto is within a range of 0.5 - 10.

22. The microphone according to claim 16, wherein a projection area of each vibration sensing portion of the at least one vibration sensing portion along the first direction is greater than a projection area of a beam structure connected thereto along the first direction.

23. The microphone according to claim 16, wherein at least a portion of the plurality of beam structures are located on different sidewalls of the support member, and the at least a portion of the plurality of beam structures located on the different sidewalls of the support member are connected to a same vibration sensing portion of the at least one vibration sensing portion.
